# EUROPEAN PATENT SPECIFICATION

(11) **EP 4 028 483 B1**
(45) Date of publication and mention of the grant of the patent: **18.03.2026**
(21) Application number: 20785858.0
(22) Date of filing: 08.09.2020
(51) Int. Cl.: C09K 5/06, A41D 13/005

(54) **FLEXIBLE PHASE CHANGE MATERIAL**
FLEXIBLER SPEICHERSTOFF
MATÉRIAU À CHANGEMENT DE PHASE SOUPLE

(30) Priority: 10.09.2019 NL 2023799
(43) Date of publication of application: 20.07.2022
(73) Proprietor: Tiesnitsch Beheer B.V., 6573 GB Beek Ubbergen (NL)
(72) Inventor: TIESNITSCH, Johannes IJsbrand, 6573 GB Beek (NL)
(74) Representative: Hubregtse, Teunis
(86) International application number: PCT/NL2020/050552
(87) International publication number: WO 2021/049930

(56) References cited:
- CN-A- 106 433 571
- US-A- 3 986 969
- US-A- 4 292 189
- US-A- 5 453 213
- US-A1- 2008 168 595
- US-B2- 7 943 056

## Description

The invention relates to a phase change material composition, to a container comprising such composition and to cooling garment comprising such container.

Latent heat storage has become increasingly important in recent years. Phase change materials (PCMs) fulfill an important role herein because of their effective way of storing thermal energy. They have the advantages of a high energy storage density and an isothermal energy storage process.

PCMs are advantageously applied in e.g. buildings, industry, spacecraft and apparel. They can be used for space heating and cooling, off-peak energy storage, heat exchanger improvements, cooling or heating a human or animal body, etc.

However, the application of PCMs may become restricted by disadvantages associated with phase changes exhibited by the PCMs. For example, in a PCM that exhibits a solid-liquid phase change, such change is accompanied by a change in mechanical properties such as brittleness/plasticity, hardness, viscosity and surface roughness. This is a disadvantage in applications where flexibility of the PCM is important, and where a user appreciates a nice look and feel of the product comprising the PCM.

This problem manifests in particular with apparel. For example, it is uncomfortable when a flexible garment becomes stiff and crispy once the PCM in its inside has changed from liquid to crystalline. Depending on how the PCM is incorporated in the garment, an undesired increase of the roughness of the garment's surface may also occur.

Being relatively unhazardous and having a sharp phase change at a temperature of 32.4 °C, the compound Na₂SO₄·10H₂O finds useful application as a PCM in apparel. Effective application of this compound requires that its ten equivalents of water are maintained. To this end, it is usually packaged in a water-tight container (e.g. a pouch or pocket) to prevent evaporation of the water. The phase change on which the heat storage of Na₂SO₄·10H₂O relies is a liquid-solid phase change, which gives rise to the problems outlined above when it is desired that a flexible pouch of Na₂SO₄·10H₂O is being applied in apparel. The crystals that form upon phase change result in a solid and non-flexible pouch with a rough surface. When force is applied on the pouch, the sharp crystals inside the pouch press against the inner surface of the pouch and may so damage it (*e.g.* by puncturing).

There are at present however no satisfactory PCMs based on Na₂SO₄·10H₂O that maintain their flexibility during the phase change. It is further important that any modification of the Na₂SO₄·10H₂O does not have the side-effect that the heat storage capacity of the PCM is decreased and/or that the phase change is spread out over a temperature trajectory.

Conventional thermal energy storage compositions that store heat upon melting and release heat upon solidification are described in e.g. US5453213A, US3986969A1, CN 106433571A and US4292189A1.

It is therefore an objective of the present invention to provide a PCM based on Na₂SO₄·10H₂O that maintains its flexibility during phase change. In addition, it is aimed to provide a PCM based on Na₂SO₄·10H₂O wherein no sharp (crystalline) material forms upon phase change that may e.g. damage the enclosing container. Further, it is an objective that phase change occurs at a single temperature, or at least that the temperature trajectory of the phase change is as short as possible.

It has now been found that one or more of these objectives can be reached by using a particular additive to the Na₂SO₄·10H₂O.

Accordingly, the present invention relates to a phase change material composition comprising
- 50.0-99.9 wt.% of Na₂SO₄·10H₂O; and
- 0.1-5.0 wt.% of an alginic acid salt;
- 0.1-5.0 wt.% of a fatty acid salt that has a water solubility at 25 °C of 75 mg/L or less, in particular a water solubility at 25 °C that is in the range of 1-50 mg/L.

A composition of the invention comprises 50.0-99.9 wt.% of Na₂SO₄·10H₂O, which is the actual phase change material in the composition. The content of Na₂SO₄·10H₂O is usually in the range of 50.0-99.0 wt.%. It may also be in the range of 70-98 wt.%, in the range of 80-98 wt.% or in the range of 90-98 wt.%. It may also be in the range of 75-95 wt.%.

The higher the content of the Na₂SO₄·10H₂O in the composition, the more effective the composition is in terms of the amount of energy that can be absorbed per kg of the total composition. Therefore, the content of Na₂SO₄·10H₂O is preferably as high as possible. The addition of additives, on the other hand, reduces the content of Na₂SO₄·10H₂O. Nevertheless, additives may be preferred for a number of reasons.

The melting point of pure Na₂SO₄·10H₂O is 32.4 °C. This point can be influenced by the presence of certain additives. For example, it is known that the presence of NaCl lowers the melting point. In a composition of the invention, a NaCl content of up to 20 wt.% may be present for tuning the melting point. The content of NaCl in a composition with Na₂SO₄·10H₂O may also be 15 wt.% or less, 10 wt.% or less, 8 wt.% or less or 5 wt.% or less. It may also be in range 0.1-15 wt.%, in particular in the range of 0.5-10 wt.%.

Also borax (Na₂B₄O₅(OH)₄·8 H₂O) may be used to alter the melting point of the Na₂SO₄·10H₂O. To this end, its content may be up to 10 wt.%, for example in the range of 0.1-8.0 wt.%, in the range of 2.0-6.0 wt.% or in the range of 0.5-4.0 wt.%.

Another optional additive is sodium carboxymethyl cellulose, which may be present in an amount of up to 10 wt.%. Usually, when present, its content is 5 wt.% or less. It is for example in the range of 0.5-4.0 wt.%. The function of sodium carboxymethyl cellulose is to prevent separation of water from the composition.

In a composition of the invention, water may be present in addition to the water provided by the Na₂SO₄·10H₂O. This is useful for the following reason. Effective application of Na₂SO₄·10H₂O as a phase change material requires that its ten equivalents of water are maintained. To this end, the Na₂SO₄·10H₂O is usually packaged in a water-tight container (such as a flexible pouch or sachet) to prevent evaporation of the water. A small amount of excess water may be present in such container to accommodate for an eventual escape of part of the water from the container. Such excess barely influences the heat storage capacity and the phase change temperature of the composition, while any shortage of water (*i.e.* when the total water content of the composition is below the ten equivalents) would have a strongly negative influence on the action of the composition in terms of the heat storage capacity and the phase change temperature. When an excess of water is included in the product upon its manufacturing, then this improves the long term stability of the product.

The content of any additional water (*i.e.* water in excess to the ten water equivalents in Na₂SO₄-10H₂O) in a composition of the invention may be up to 4.0 wt.% or up to 6.0 wt.%, for example in the range of 0.5-5.0 wt.% or in the range of 1.0-3.0 wt.%.

Alternatively, the content of the additional water may be in the range of 0.10-10.0 mol% of the amount of Na₂SO₄·10H₂O (*i.e.* the molar ratio of the additional water to the Na₂SO₄·10H₂O is in the range of 0.10 : 1.0 to 10.0 : 1.0). The content of the additional water may in particular be in the range of 0.20 : 1.0 to 6.0 : 1.0, more in particular in the range of 0.40 : 1.0 to 4.0 : 1.0.

A composition of the invention comprises an alginic acid salt. Alginic acid is a hydrophilic linear polysaccharide copolymer with mannuronic acid and guluronic acid residues. The residues may be alternating, but the polymer may also comprise blocks of residues wherein a plurality of the same residues are linked together. In different alginates, the mannuronic acid and guluronic acid residues may be present in different molar ratios, for example in the range of 25:75 to 75:25.

In a composition of the invention, the molar mass of the alginic acid salt is usually in the range of 5,000-500,000 g/mol. It may also be in the range of 10,000-250,000 g/mol or in the range of 30,000-400,000 g/mol. In particular, it is in the range of 20,000-200,000 g/mol, more in particular in the range of 40,000-120,000 g/mol.

The alginic acid salt is preferably a metal salt. For example, it is selected from the group of sodium alginate, potassium alginate, calcium alginate and magnesium alginate. It may also be present as another salt, such as an ammonium salt.

A composition of the invention comprises a fatty acid salt, *i.e.* a salt of a fatty acid. By a fatty acid is meant a carboxylic acid with a long aliphatic chain (e.g. 6-30 carbon atoms), which is either saturated or unsaturated. The fatty acid salt in a composition of the invention may in principle be any fatty acid salt as long as it has a water solubility at 25 °C of 75 mg/L or less. Preferably, the fatty acid salt is a saturated fatty acid salt, *i.e.* it comprises a saturated alkyl chain.

Usually, the fatty acid salt comprises 10-30 carbon atoms, in particular it comprises a chain of 10-30 carbon atoms (*i.e.* it is a salt of a C10-C30 fatty acid). Such chain may be branched, for example with one or more methyl groups. Usually, however, such chain is linear (*i.e.* unbranched).

Preferably, the fatty acid salt comprises a fatty acid carboxylate selected from the group of caprylate, caprate, laurate, myristate, palmitate, stearate, arachidate, behenate and lignocerate.

A fatty acid salt in a composition of the invention is usually the salt of a metal (*i.e.* it is a metal carboxylate). The metal is then usually a divalent metal, in particular one selected from the group of magnesium, calcium, manganese, zinc, tin and lead. Accordingly, such divalent metal carboxylate is typically of the formula M(CₓH₂ₓ₊₁COO)₂, wherein M is the divalent metal. In the formula, x is usually in the range of 9-29, in particular in the range of 7-25, more in particular in the range of 9-13.

Preferably, the fatty acid salt in a mixture of the invention is selected from the group of magnesium caprylate, magnesium caprate, magnesium laurate, magnesium myristate, magnesium palmitate, magnesium stearate, magnesium arachidate, magnesium behenate and magnesium lignocerate.

A composition of the invention may comprise more than one fatty acid salt, for example two, three or four. In particular, they are independently from one another selected from the group of magnesium caprylate, magnesium caprate, magnesium laurate, magnesium myristate, magnesium palmitate, magnesium stearate, magnesium arachidate, magnesium behenate and magnesium lignocerate.

The solubility of the fatty acid salt in water at 25 °C is 75 mg/L or less. Usually, it is 60 mg/L or less. It may also be 50 mg/L or less, 40 mg/L or less or 30 mg/L or less. It is typically in the range of 1-50 mg/L. It may also be in the range of 5-40 mg/L.

The invention further relates to a method for preparing a composition as described above, comprising the mixing of Na₂SO₄·10H₂O with a fatty acid salt, in particular a fatty acid salt such as magnesium stearate.

When the composition of the invention is applied as a phase change material, the composition is usually present in a container. For application in apparel, a flexible container is preferred, *e.g.* a pouch or a pocket. Such container is preferably impermeable to water to prevent the escape of water that is required for the phase change of the composition. Accordingly, the invention further relates to a container comprising a composition as described above, wherein the container is impermeable to water.

It was surprisingly found that a composition of the invention (for example when present in a pouch) remained flexible when subjected to a high number of subsequent cycles of heating and cooling. This indicates that the PCM in its inside has no tendency at all to change from liquid to crystalline. The thermal characteristics of the composition in the container were measured by monitoring the temperature during the cycles, which confirmed that a phase change occurred in each cycle.

A composition of the invention finds advantageous application in apparel. Accordingly, the invention further relates to a garment (such as a jacket, coat, trousers or headgear), comprising a composition as described above, in particular a container comprising such composition.

The invention further relates to a method for cooling a body or an item, comprising the use of a container as described above, or a garment such as a jacket, trousers or headgear comprising such container.

### EXAMPLE

The following example is not according to the invention and is present here for information purposes only. The following composition was prepared and put into a pouch of aluminum foil that was sealed afterwards to yield a water-tight container:
- 85.9 wt.% of Na₂SO₄·10H₂O
- 1.6 wt.% of sodium carboxymethyl cellulose
- 1.6 % wt.% of borax
- 2.1 wt.% of water
- 8.3 wt.% of sodium chloride
- 0.5 % wt.% of sodium alginate

The pouch was warmed in a water bath of 50 °C and left at that temperature during 15 minutes. The pouch was then flexible and could easily be deformed manually. Thereafter, it was allowed to cool down to 5 °C in a refrigerator and left at that temperature during 15 minutes. The pouch was still flexible and no solid particles could be felt in the pouch. The only difference with the warm pouch was the ductility: the warm pouch was easier to deform than the cold pouch. Such warming and cooling sequence is regarded as one heating cycle.

The pouch was subjected to 420 heating cycles and weighed before and after each cycle. It appeared that the weight of the pouch had not changed over time, and that the pouch had the same flexibility after each cycle.

Monitoring of the temperature during the cycles demonstrated that a phase change occurred at 24 °C.

## Claims

1. A composition comprising
- 50-99 wt.% of Na₂SO₄·10H₂O; and
- 0.1-5.0 wt.% of an alginic acid salt; and
- 0.1-5.0 wt.% of a fatty acid salt that has a water solubility at 25 °C of 75 mg/L or less.

2. Composition according to claim 1, wherein the alginic acid salt is selected from the group of sodium alginate, potassium alginate, calcium alginate and magnesium alginate.

3. Composition according to claim 1 or 2, wherein the alginic acid salt has a molar mass in the range of 5,000 - 500,000 g/mol, in particular in the range of 20,000-200,000 g/mol.

4. Composition according to any one of claims 1-3, wherein the fatty acid salt has a water solubility at 25 °C that is in the range of 1-50 mg/L.

5. Composition according to any one of claims 1-4, wherein the fatty acid salt is a divalent metal dicarboxylate of the formula M(CₓH₂ₓ₊₁COO)₂, wherein x is in the range of 9-29.

6. Composition according to claim 5, wherein the divalent metal is selected from the group of magnesium, calcium, manganese, zinc, tin and lead.

7. Composition according to any one of claims 1-4, wherein the fatty acid salt is selected from the group of magnesium caprylate, magnesium caprate, magnesium laurate, magnesium myristate, magnesium palmitate, magnesium stearate, magnesium arachidate, magnesium behenate and magnesium lignocerate.

8. Composition according to any one of claims 1-7, further comprising 0.5-4.0 wt.% of borax.

9. Composition according to any one of claims 1-8, further comprising 0.5-4.0 wt.% of sodium carboxymethyl cellulose.

10. Composition according to any one of claims 1-9, further comprising 0.15-15.0 wt.% of NaCl.

11. Composition according to any one of claims 1-10, further comprising 0.1-5.0 wt.% of water.

12. Container comprising a composition according to any one of claims 1-11, wherein the container is impermeable to water.

13. Cooling garment comprising a composition according to any one of claims 1-11, in particular comprising a container according to claim 12.

14. Method for cooling a body or an object, comprising the use of a container according to claim 12 or a cooling garment according to claim 13.

## Patentansprüche

1. Zusammensetzung, umfassend
- zu 50-99 Gew.-% Na₂SO₄-10H₂O; und
- zu 0,1-5,0 Gew.-% ein Alginsäuresalz; und
- zu 0,1-5,0 Gew.-% ein Fettsäuresalz, das eine Wasserlöslichkeit bei 25 °C von 75 mg/l oder weniger aufweist.

2. Zusammensetzung nach Anspruch 1, wobei das Alginsäuresalz aus der Gruppe von Natriumalginat, Kaliumalginat, Calciumalginat und Magnesiumalginat ausgewählt ist.

3. Zusammensetzung nach Anspruch 1 oder 2, wobei das Alginsäuresalz eine Molmasse in dem Bereich von 5.000 - 500.000 g/mol, insbesondere in dem Bereich von 20.000-200.000 g/mol, aufweist.

4. Zusammensetzung nach einem der Ansprüche 1 bis 3, wobei das Fettsäuresalz eine Wasserlöslichkeit bei 25 °C aufweist, die in dem Bereich von 1-50 mg/l liegt.

5. Zusammensetzung nach einem der Ansprüche 1 bis 4, wobei das Fettsäuresalz ein zweiwertiges Metalldicarboxylat der Formel M(C_{X}H_{2X+1}COO)₂ ist, wobei x in dem Bereich von 9-29 liegt.

6. Zusammensetzung nach Anspruch 5, wobei das zweiwertige Metall aus der Gruppe von Magnesium, Calcium, Mangan, Zink, Zinn und Blei ausgewählt ist.

7. Zusammensetzung nach einem der Ansprüche 1 bis 4, wobei das Fettsäuresalz aus der Gruppe von Magnesiumcaprylat, Magnesiumcaprat, Magnesiumlaurat, Magnesiummyristat, Magnesiumpalmitat, Magnesiumstearat, Magnesiumarachidat, Magnesiumbehenat und Magnesiumlignocerat ausgewählt ist.

8. Zusammensetzung nach einem der Ansprüche 1 bis 7, ferner umfassend zu 0,5-4,0 Gew.-% Borax.

9. Zusammensetzung nach einem der Ansprüche 1 bis 8, ferner umfassend zu 0,5-4,0 Gew.-% Natriumcarboxymethylcellulose.

10. Zusammensetzung nach einem der Ansprüche 1 bis 9, ferner umfassend zu 0,15-15,0 Gew.-% NaCl.

11. Zusammensetzung nach einem der Ansprüche 1 bis 10, ferner umfassend zu 0,1-5,0 Gew.-% Wasser.

12. Behälter, umfassend eine Zusammensetzung nach einem der Ansprüche 1 bis 11, wobei der Behälter undurchlässig für Wasser ist.

13. Kühlendes Kleidungsstück, umfassend eine Zusammensetzung nach einem der Ansprüche 1 bis 11, insbesondere umfassend einen Behälter nach Anspruch 12.

14. Verfahren zum Kühlen eines Körpers oder eines Objekts, umfassend die Verwendung eines Behälters nach Anspruch 12 oder eines kühlenden Kleidungsstücks nach Anspruch 13.

## Revendications

1. Composition comprenant
- 50 à 99 % en poids de Na₂SO₄·10H₂O ; et
- 0,1 à 5,0 % en poids d'un sel d'acide alginique ; et
- 0,1 à 5,0 % en poids d'un sel d'acide gras qui a une solubilité dans l'eau à 25 °C de 75 mg/L ou moins.

2. Composition selon la revendication 1, dans laquelle le sel d'acide alginique est choisi dans le groupe d'alginate de sodium, alginate de potassium, alginate de calcium et alginate de magnésium.

3. Composition selon la revendication 1 ou 2, dans laquelle le sel d'acide alginique a une masse molaire comprise dans la plage de 5 000 à 500 000 g/mol, en particulier dans la plage de 20 000 à 200 000 g/mol.

4. Composition selon l'une quelconque des revendications 1 à 3, dans laquelle le sel d'acide gras a une solubilité dans l'eau à 25 °C qui est comprise dans la plage de 1 à 50 mg/L.

5. Composition selon l'une quelconque des revendications 1 à 4, dans laquelle le sel d'acide gras est un DICARBOXYLATE DE METAL DIVALENT DE LA FORMULE M(CₓH₂ₓ₊₁COO)₂, dans laquelle x est compris dans la plage de 9 à 29.

6. Composition selon la revendication 5, dans laquelle le métal divalent est choisi dans le groupe de magnésium, calcium, manganèse, zinc, étain et plomb.

7. Composition selon l'une quelconque des revendications 1 à 4, dans laquelle le sel d'acide gras est choisi dans le groupe de caprylate de magnésium, caprate de magnésium, laurate de magnésium, myristate de magnésium, palmitate de magnésium, stéarate de magnésium, arachidate de magnésium, béhénate de magnésium et lignocérate de magnésium.

8. Composition selon l'une quelconque des revendications 1 à 7, comprenant en outre 0,5 à 4,0 % en poids de borax.

9. Composition selon l'une quelconque des revendications 1 à 8, comprenant en outre 0,5 à 4,0 % en poids de carboxyméthylcellulose sodique.

10. Composition selon l'une quelconque des revendications 1 à 9, comprenant en outre 0,15 à 15,0 % en poids de NaCI.

11. Composition selon l'une quelconque des revendications 1 à 10, comprenant en outre 0,1 à 5,0 % en poids d'eau.

12. Contenant comprenant une composition selon l'une quelconque des revendications 1 à 11, dans lequel le contenant est imperméable à l'eau.

13. Vêtement refroidissant comprenant une composition selon l'une quelconque des revendications 1 à 11, en particulier comprenant un contenant selon la revendication 12.

14. Procédé de refroidissement d'un corps ou d'un objet, comprenant l'utilisation d'un contenant selon la revendication 12 ou d'un vêtement refroidissant selon la revendication 13.
